# EUROPEAN PATENT APPLICATION

(11) **EP 1 825 946 A1**
(43) Date of publication of application: **29.08.2007**
(21) Application number: 06253150.4
(22) Date of filing: 19.06.2006
(51) Int. Cl.: B23K 20/12, B23K 20/24

(54) **Friction stir welding method of two members having different thicknesses**

(30) Priority: 27.02.2006 JP 2006050127
(71) Applicant: HITACHI, LTD., Chiyoda-ku Tokyo 100-8280 (JP)
(72) Inventor: Ezumi, Masakuni c/o Hitachi, Ltd, Chiyoda-ku, Tokyo 100-8220 (JP)
(74) Representative: Paget, Hugh Charles Edward

(57) **Abstract**

There is provided a friction stir welding method for forming a satisfactory weld portion by two steps when members having different thicknesses are butted together and friction stir welded. A first member 10 having a thickness T₁ and the second member 20 having a thickness T₂, which is smaller than the thickness T₁, are placed on a table 40 to form a stepped butt portion 30. In a first step, metal is transferred from the first member 10 to the second member 20 to form a convex substitute portion 150 in the stepped portion by rotatingly moving a columnar tool 100 along the butt portion 30. In a second step, friction stir welding is performed on the convex substitute portion 150 to obtain a satisfactory weld portion 250 by using a friction stir welding tool 200.

## Description

### BACKGROUND OF THE INVENTION

### Field of the Invention

The present invention relates to a friction stir welding method suitable for welding of a portion where members having different thicknesses are butted together.

### Description of the Related Art

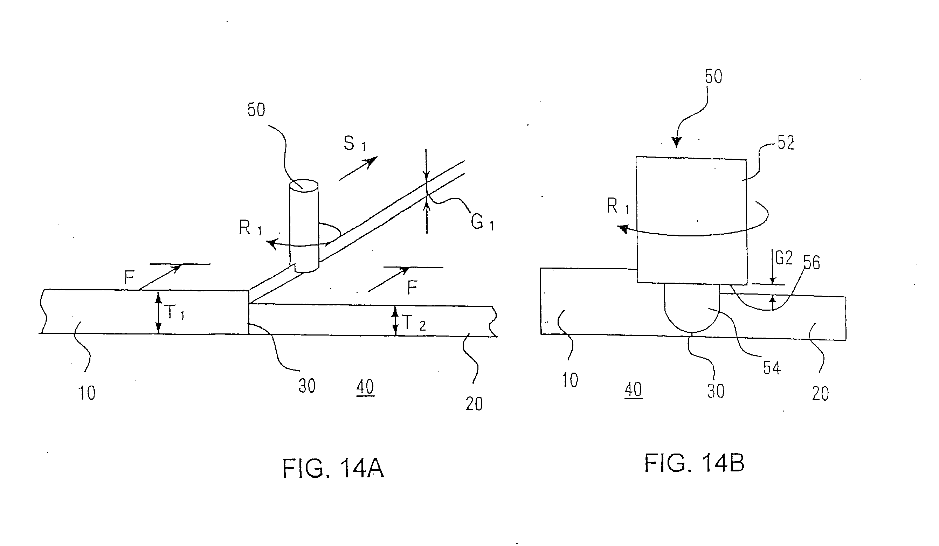

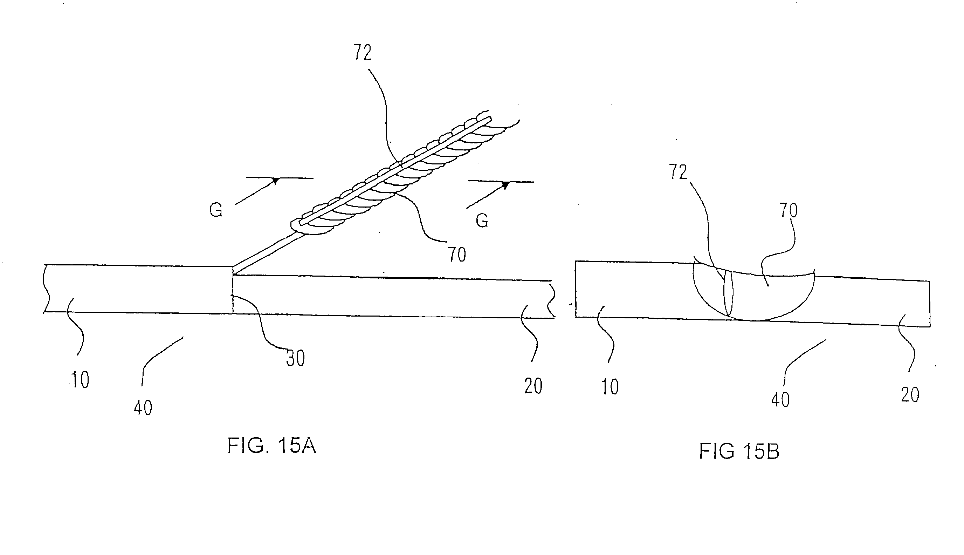

FIGS. 14A, 14B, 15A and 15B are explanatory views of a conventional friction stir welding method, showing a state in which members 10 and 20 having different thicknesses are butted together and friction stir welded. FIGS. 14A and 15A are perspective views of a friction stir weld portion. FIG. 14B is a sectional view taken along the line F-F of FIG. 14A, and FIG. 15B is a sectional view taken along the line G-G of FIG. 15A. FIG. 14A is a view showing a state in which a friction stir welding tool 50 is inserted in a first member 10 and a second member 20.

For example, the first member 10 is a plate having a thickness T₁, and the second member 20 is a member having a thickness T₂. The thickness T₁ is larger than the thickness T₂. Therefore, when both of the members are placed on a flat base 40 such as a table, a height difference G₁ appears between the top surfaces of both of the members 10 and 20 in a butt portion 30.

The friction stir welding tool 50 is inserted in the butt portion 30, and is moved in the direction indicated by the arrow S₁ while being rotated in the direction indicated by the arrow R₁ (clockwise direction). The friction stir welding tool 50 has a small-diameter portion 54 at the tip end of a large-diameter portion 52, and both portions 54 and 52 are connected to each other via a shoulder portion 56.

The friction stir welding tool 50 is moved along a weld line while being rotated in a state in which the small-diameter portion 54 is inserted in the members 10 and 20, and the shoulder portion 56 and the large-diameter portion 52 are inserted in the top surface of the first member 10 having a larger thickness as shown in FIG. 14B, by which welding is allowed to proceed while friction stirring is performed.

As shown in FIG. 14B, a clearance G₂ is formed between the shoulder portion 56 and the top surface of the member 20 because the first member 10 has a height T₁, whereas the second member has a lower height T₂.

For this reason, a defect 72 is liable to occur in a friction stir weld portion 70 as shown in FIG. 15B.

This fact (excluding the specific defect) has been disclosed in FIG. 11 of Japanese Patent Publication No. 3070735 (USP6,050,474)(Patent Document 1) and Japanese Patent Laid-Open Publication No. 2000-167677 (USP6,315,187) (Patent Document 2).

As described above, the defect 72 extending along the friction stir weld line sometimes occurs in the friction stir weld portion 70.

As a cause for the occurrence of this defect, it is conceivable that the volume of a material introduced into the butt portion 30 becomes insufficient due to the height difference of the dimension G₁, by which the defect 72 is produced.

### SUMMARY OF THE INVENTION

An object of the present invention is to provide a friction stir welding method that solves the above-described problem.

To achieve the above object, the present invention provides a friction stir welding method in which a first member having a large height and a second member having a small height are butted together, and a butt portion having a height difference is friction stir welded, including the steps of transferring a metal on the first member side to a top surface on the second member side to form a convex on the top surface of the second member by moving a round-bar shaped rotating convex forming tool having a tip end portion whose end face is substantially flat relatively with respect to the first and second members while the convex forming tool is rotated; and performing friction stir welding by inserting a rotating friction stir welding tool from above the convex on the second member and the first member and by moving the friction stir welding tool relatively with respect to the first and second members in a state in which the boundary between a large-diameter portion of the friction stir welding tool and a small-diameter portion at the tip end of the tool is positioned within the height range of the convex.

According to this friction stir welding method, the metal of the first member is brought to the second member side by using the convex forming tool, and thereafter friction stir welding is performed. Therefore, a substantial gap G₁ is eliminated, so that friction stir welding can be performed satisfactorily. Since the metal of the first member is brought to the second member, the convex lies on the second member. Thus, if the insertion height of the friction stir welding tool inserted in the first member and the convex from the upside is set so that the boundary between the large-diameter portion and the small-diameter portion is positioned within the convex to perform friction stir welding, friction stir welding can be performed satisfactorily.

To bring the metal of the first member to the second member, viewing from the direction in which the rotating convex forming tool moves, the second member having a smaller height lies on the right-hand side, and the rotating convex forming tool is rotated clockwise; thereby satisfactory metal transfer can be obtained. In the case where the second member is arranged on the left-hand side, the convex forming tool is rotated counterclockwise.

Then, friction stir welding is performed with the transferred metal being a convex.

Therefore, friction stir welding can be performed satisfactorily.

As a method for satisfactory friction stir welding members having height differences as described above, methods disclosed in Japanese Patent Laid-Open Publication No. 2000-233286 (Patent Document 3), Japanese Patent Publication No. 03575749 (USP6, 622, 904) (Patent Document 4), and Japanese Patent Laid-Open Publication No. 2003-039181 (USP6, 783, 055) (Patent Document 5) are known. In any of these methods, the metal of a thicker member is transferred onto the surface of a thinner member, and then friction stir welding is performed. Also, the metal transfer work and the friction stir welding are performed at the same time. These Documents do not describe the reason why the metal can be transferred and the direction of rotation of the rotating tool.

### BRIEF DESCRIPTION OF THE DRAWINGS

FIG. 1 is a perspective view showing a friction stir welding method in accordance with an embodiment of the present invention;
FIG. 2 is a sectional view taken along the line A-A of FIG. 1;
FIG. 3 is a sectional view taken along the line B-B of FIG. 1;
FIG. 4 is a sectional view taken along the line C-C of FIG. 1;
FIG. 5 is a sectional view taken along the line D-D of FIG. 1;
FIG. 6 is an explanatory view showing a friction stir welding method in accordance with an embodiment of the present invention;
FIG. 7 is an explanatory view showing a friction stir welding method in accordance with an embodiment of the present invention;
FIG. 8 is a plan view of FIG. 7;
FIGS. 9A, 9B and 9C are sectional view taken along the line E-E of FIG. 8 (FIG. 7);
FIG. 10 is an explanatory view of a convex forming tool;
FIG. 11 is an explanatory view of a convex forming tool;
FIG. 12 is an explanatory view of a convex forming tool;
FIG. 13 is an explanatory view of a convex forming tool;
FIGS. 14A and 14B are explanatory view of a conventional friction stir welding method; and
FIGS. 15A and 15B are explanatory view of a conventional friction stir welding method.

### DETAILED DESCRIPTION OF THE PREFERRED EMBODIMENTS

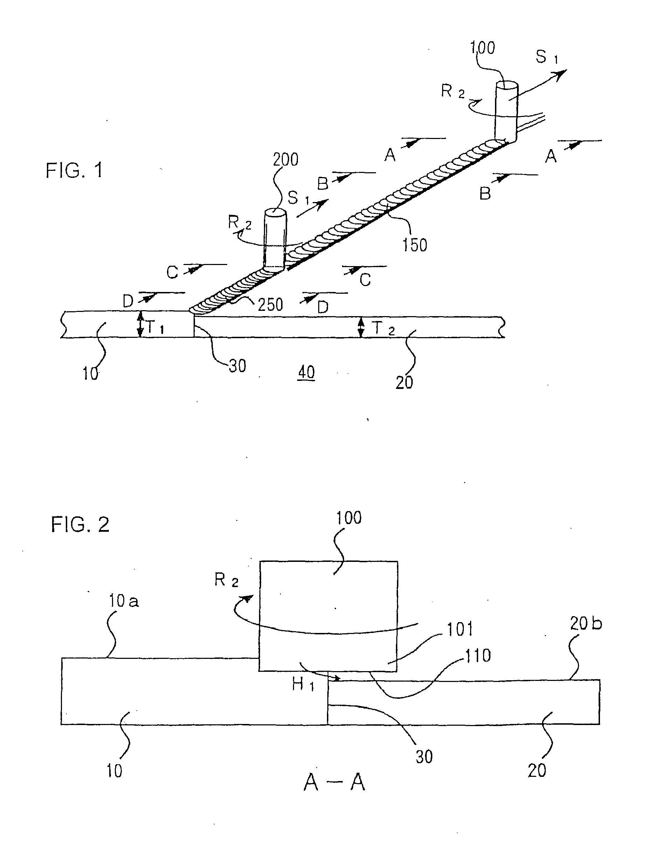

One example of a friction stir welding method in accordance with the present invention will now be described with reference to FIGS. 1 to 6. The welding conditions of a first member 10 and a second member 20 are the same as those explained with reference to FIGS. 14A, 14B, 15A and 15B.

Specifically, a butt portion 30 in which the first member 10 having a thickness T₁ and the second member 20 having a thickness T₂, which is smaller than the thickness T₁, are butted together is friction stir welded. The first member 10 and the second member 20 each are made of an aluminum alloy. In FIGS. 1 to 4, the second member 20 having a smaller thickness lies on the right-hand side of the first member 10.

The friction stir welding method in accordance with the present invention includes two steps.

In a first step, prior to the friction stir welding of the butt portion 30, a convex substitute portion 150 is formed on the top surface of the second member 20 in the butt portion 30 by a convex forming tool 100. The convex substitute portion 150 is formed by transferring metal from the first member 10.

FIG. 2 shows a shape of the convex forming tool 100. The convex forming tool 100 has a columnar shape (round-bar shape), and the end face of a tip end portion 101 thereof is formed into a flat surface 110. The convex forming tool 100 has no small-diameter portion like a friction stir welding tool. The flat surface 110 is perpendicular to the axis of the round bar. The convex forming tool 100 is made of a nonconsumable alloy as in the case of the friction stir welding tool.

The convex forming tool 100 is positioned so as to occupy a position such that the flat surface 110 of the tip end portion 101 is lower than a top surface 10a of the first member 10 having a larger thickness and higher than a top surface 20a of the second member 20.

The convex forming tool 100 is moved in the direction indicated by the arrow S₁ while being rotated in the direction indicated by the arrow R₂ (clockwise direction).

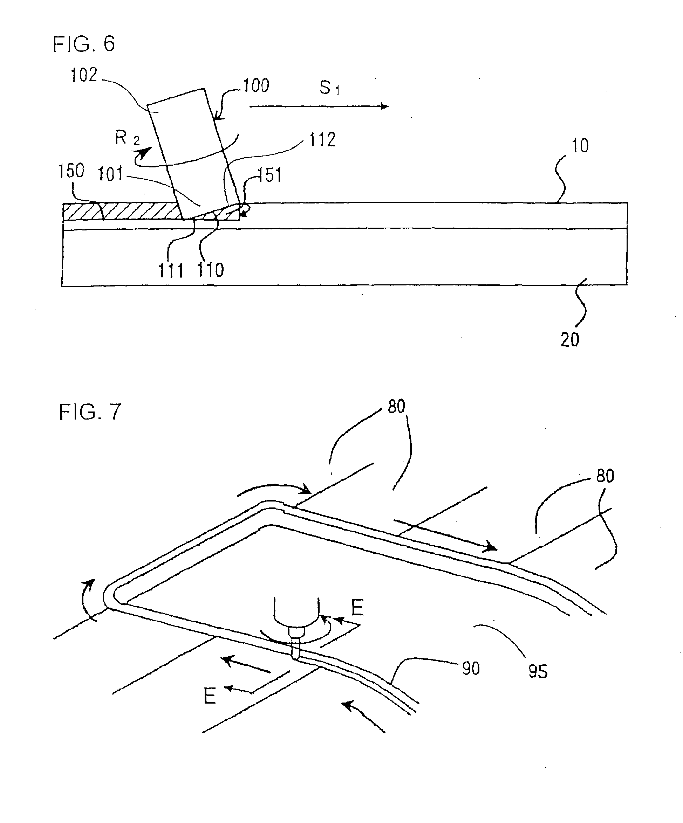

By this rotation, a material in an upper portion of the first member 10 is softened and also is pushed out in the direction indicated by the arrow H₁ in FIG. 2. As shown in FIG. 6, the upper end portion 102 side of the convex forming tool 100 is inclined about 3 degrees to the rear with respect to the travel direction. Therefore, the metal of the first member 10 can be transferred from the first member 10 to the second member 20 side. That is to say, since the tool 100 is rotated clockwise, the metal of the first member 10, which has transferred onto the second member 20 on the right-hand side, drops immediately and gets on the secondmember 20 because there is no member for supporting the metal from the downside. This transferred metal is fixed to the second member 20. Further, the transferred metal is held by a rear end portion 111 on the rear side in the travel direction of the tip end portion 101 of the tool 100 due to the movement in the direction of S₁ of the tool 100.

It is conceivable that the convex forming tool 100 is moved while being rotated in the direction opposite to the direction indicated by the arrow R₂ (counterclockwise direction). In this case, however, since the second member 20 lies on the right-hand side, there is no material to be transferred to the left on the right-hand side. On the rear side in the travel direction of the convex forming tool 100, the first member 10 is sometimes moved to the second member 20 by the counterclockwise rotation of the tool; however, the amount thereof is small, and the convex is formed a little on the second member 20. This is true only in the case where the convex forming tool 100 having the flat surface 110 in the tip end portion 101 thereof is used.

It is also conceivable that the second member 20 is laid on the left-hand side of the first member 10 (the first member 10 lies on the right-hand side of the second member 20), and the convex forming tool 100 is rotated counterclockwise. In this case, it can be thought that the convex substitute portion 150 is formed on the second member 20 because a material for forming the convex lies on the right-hand side.

By this action, after the convex forming tool 100 has passed through, the convex substitute portion 150 higher than the top surface 20a of the second member 20 is formed in an upper part of the butt portion 30.

The convex substitute portion 150 is not laid simply on the top surface of the second member 20, but is fixed to the second member 20.

As shown in FIG. 6, the convex forming tool 100 is configured so that the upper end portion 102 is inclined about 3 degrees to the rear in the travel direction with respect to the tip end portion 101, a metal 151 is present below the flat surface 110 of the tip end portion 101, so that in a front end portion 112 of the tip end portion 101 of the tool 100, the metal 151 is brought to the right-hand side (or the left-hand side) by the clockwise rotation (or the counterclockwise rotation) of the tool 100. Then, the transferred metal is pressed by a location of the rear end portion 111 of the tip end portion 101 of the tool 100. Thereby, the metal is believed to be fixed to the second member 20.

Even if a gap is present in the butt portion 30 between the first member 10 and the second member 20, the convex substitute portion 150 is formed even in an upper part of this gap. Some of the convex substitute portion 150 may intrude into the gap.

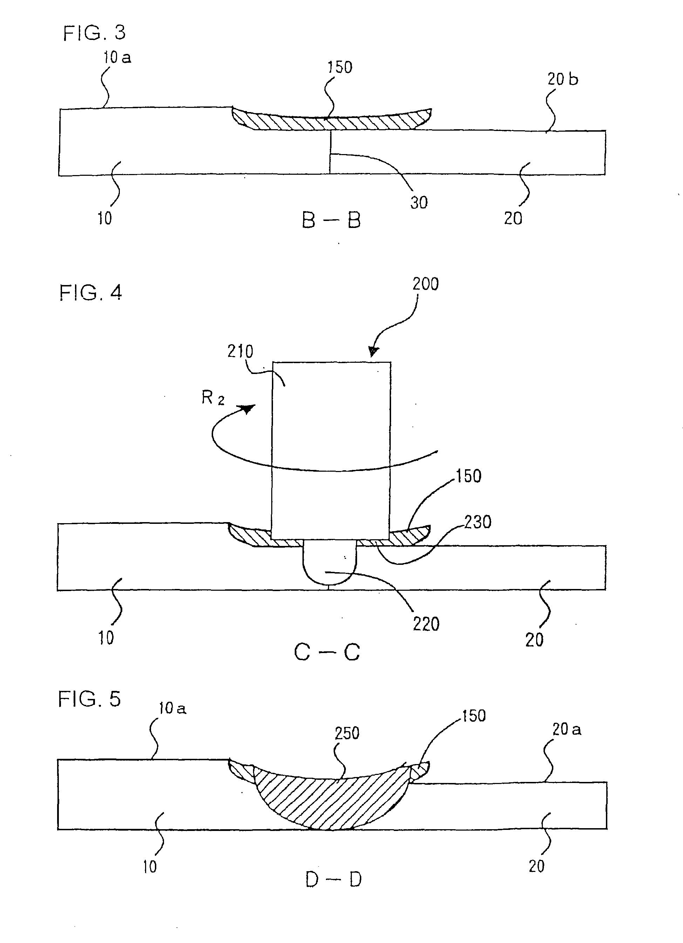

FIG. 4 shows a second step in which a friction stir welding tool 200 is inserted from above the convex substitute portion 150 formed in the first step to perform friction stir welding along the butt portion 30.

The friction stir welding tool 200 includes a large-diameter portion 210, a small-diameter portion 220, and a shoulder portion 230 connecting the large-diameter portion 210 and the small-diameter portion 220 to each other, and performs friction stir welding by a publicly known mode.

The friction stir welding is performed by positioning the shoulder portion 230 within the thickness range of the convex substitute portion 150. Regarding the direction of rotation of the friction stir welding tool 200, a mode in which the tool 200 is rotated in the direction of R₂ is shown in FIGS. 1 and 4. However, since the friction stir welding does not depend on the direction of rotation in this example, it is apparent that the friction stir welding tool 200 can be rotated in the opposite direction.

Therefore, the shoulder portion 230 does not come into contact with the second member 20. Since the shoulder portion 230 is in contact with the convex substitute portion 150, the convex substitute portion 150 accomplishes the same action as that of the conventional convex.

FIG. 5 shows a state in which a weld portion 250 is formed by friction stir welding.

By forming the convex substitute portion 150 in advance, a defect-free friction stir weld portion 250 can be formed in the first and second members 10 and 20 having different thicknesses.

Since the convex substitute portion 150 lies above the gap of butt portion, even if a gap is present between the butt surfaces of the first and second members 10 and 20 (in the horizontal direction at right angles to the thickness), the metal of the convex substitute portion 150 is transferred into this gap, and hence the gap is filled with the metal. Therefore, a satisfactory friction stir weld portion 250 can be obtained.

Herein, the external shape of the convex forming tool 100 is preferably larger than that of the friction stir welding tool 200. Therefore, the width of the convex substitute portion 150 formed by the convex forming tool 100 is larger than a half of the external shape of the friction stir welding tool 200. For this reason, the tool 200 can reach the member 20 and the convex substitute portion 150.

Next, as necessary (in the case where the top surface is an outer surface of an apparatus, or in the case where the surface is required to be smooth), excess metal is removed from the surfaces of the convex substitute portion 150 and the friction stir weld portion 250 by a grinder or the like in such a manner that the top surface 10a of the first member 10 and the top surface 20a of the second member 20 are connected smoothly to each other.

According to this method, the convex substitute portion 150 corresponds to the conventional convex, and even if the members 10 and 20 are friction stir welded, a defect is less liable to occur.

In the above-described example, the first and second members 10 and 20 are plate-shaped members. However, the friction stir welding method in accordance with the present invention can be applied to the welding of hollow shapes.

Conventionally, an extruded shape has been used because a convex portion is needed. However, a rolled plate can also be used as the second member 20.

Also, in the above-described example, the convex forming tool 100 and the friction stir welding tool 200 are moved to perform welding. However, the first and second members 10 and 20 may be moved with respect to the tools 100 and 200. In short, the tools 100 and 200 may be moved relatively with respect to the first and second members 10 and 20.

Example 2 of the friction stir welding method in accordance with the present invention is explained with reference to FIGS. 7, 8, 9A, 9B and 9C. In the above-described example, the first and second members 10 and 20 are of a flat plate shape; however, the members 10 and 20 each may be a hollow shape. An example in which the first and second members 10 and 20 are hollow shapes is explained with reference to FIGS. 7 through 9C. FIG. 7 is a perspective view showing a part of a doorway of a railroad car side body structure. A member 80 is a hollow shape constituting the side body structure of a railroad car. Four arranged hollow shapes 80 are welded to form a side body structure. The side body structure is formed by friction stir welding a plurality of adjacent hollow shapes 80, 80 .... to each other. The side body structure has a doorway 95. A member 90 is fitted in the doorway 95. The member 90 need not be a hollow shape.

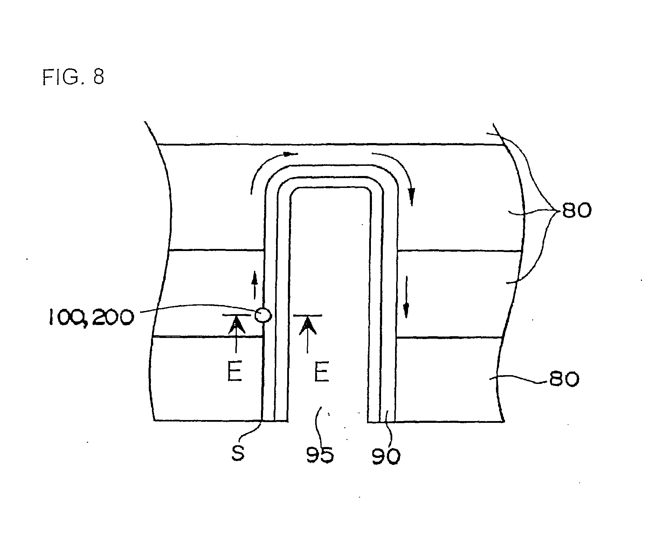

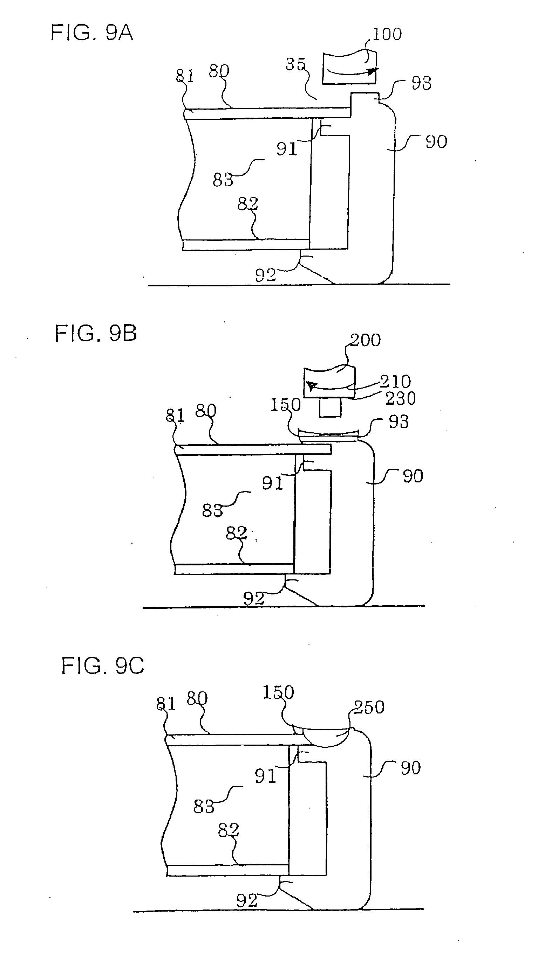

In FIGS. 9A, 9B and 9C, the extrusion direction of the hollow shape 80 is the right-and-left direction. The extrusion direction of the member 90 is the direction perpendicular to the paper surface of FIGS. 9A, 9B and 9C. In FIG. 8, the extrusion direction of the hollow shape 80 is the right-and-left direction, and the extrusion direction of the member 90 is the direction indicated by the arrows.

The member 90 is a frame of the doorway. The member 90 is a member formed by bending a continuous member 90 into a U shape. Therefore, three straight-line portions and arcuate portions formed between adjacent two straight-line portions are formed. A butt portion (U shape) between the member 90 and the member 80 is expressed by two-dimensional data. This two-dimensional data is stored in a control device of the friction stir welding device.

The member 90 has protrusions 91 and 92 on which the member 80 is put. The member 80 is put on the protrusions 91 and 92 of the member 90, and the member 80 and the member 90 are butted together. The member 80 is a hollow shape and has an upper face plate 81, a lower face plate 82, and a connection plate 83 for connecting the face plates to each other. The upper and lower face plates 81 and 82 are parallel with each other. The top surface of the member 90 in the vicinity of the butt portion between the upper face plate 81 and the member 90 is higher than the top surface of the member 80. This is because of a convex portion 93. Excluding the convex portion 93, the top surface of the member 90 is flush with the face plate 81 . The member 80 has a smaller thickness than the member 90. The member 90 is mounted on a bed. That is to say, since the member 90 is higher than the hollow shape 80 by the convex portion 93, the member 90 corresponds to the first member in the present invention, and the hollow shape 80 corresponds to the second member in the present invention.

In FIGS. 9A, 9B and 9C, the right end portions in the extrusion direction of the lower face plate 82 and the connection plate 83 of the member 80 are located at positions retreating to the left from the right end portion of the upper face plate 81. The hollow shape of the member 80 is cut in this manner.

The upper and lower surfaces of the member 80 and the member 90 are turned over so that the face plate 81 is located under the face plate 82. Then, after the members 80 and 90 have been assembled to each other as described above, the protrusion 92 appearing on the top side is joined to the face plate 82 by a fillet weld W2.

Next, prior to friction stir welding, in the butt portion between the top surface side (as shown in FIGS. 9A, 9B and 9C) of the member 90 and the member 80, the metal of the convex portion 93 is transferred to the face plate 81 side by using the convex forming tool 100. The tool 100 is rotated counterclockwise assuming that the travel direction of the tool 100 is the far direction of the drawing. Thereby, as described above, the convex substitute portion 150 is fixed on the top surface of the face plate 81 of the member 80. When the convex substitute portion 150 is formed by the tool 100, the face plate 81 is pressed downward via the transferred metal (convex substitute portion 150), so that even if a gap is produced between the back surface of the face plate 81 and the protrusion 91 due to the floating of the face plate 81 from the protrusion 91, the face plate 81 comes into contact with the protrusion 91. Therefore, preparation for satisfactory friction stir welding is made from this point of view.

Next, the butt portion between the member 80 and the member 90 is friction stir welded by the tool 200. The bottom surface (shoulder portion) 230 of the large-diameter portion 210 of the tool 200 is put in the height range of the convex substitute portion 150, and the tool 200 is moved while being rotated, by which the member 80 and the member 90 are friction stir welded to each other. The rotation center of the tool 200 is set in the butt portion between the members 80 and 90.

Since the convex substitute portion 150 is convex toward the face plate 81, friction stir welding can be performed satisfactorily. Also, the friction stir welding tool 200 does not come into contact with the face plate 81 and the top surface of the member 90 (top surface excluding the convex portion 93), a concave portion contacting with the tool 200 is not produced on the top surfaces of the face plate 81 and the member 90.

After the friction stir welding, the convex portion 93 and the portions 150 and 250 projecting upward from the top surfaces of the members 80 and 90 are cut.

The friction stir welding method in accordance with the present invention is very effective in manufacturing a railroad car body structure and the like.

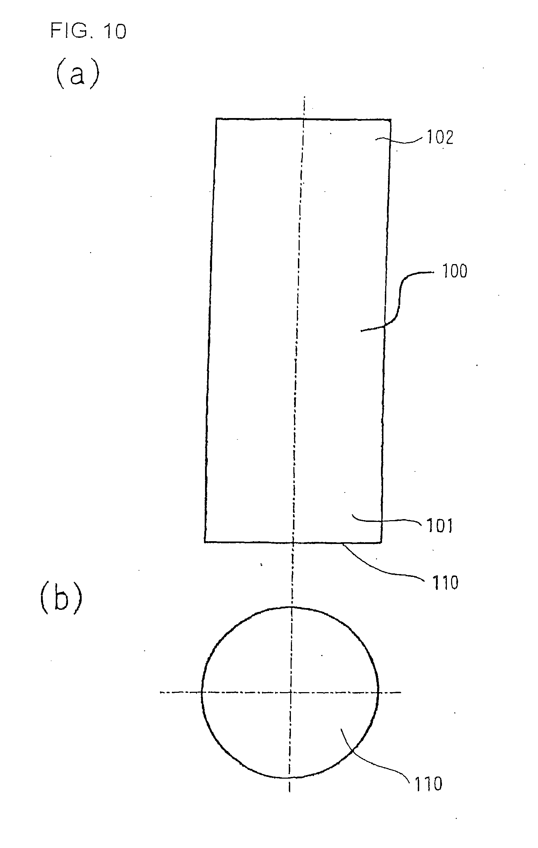

Next, a configuration of the convex forming tool 100 is explained. As described above, the end face of the tip end portion 101 of the convex forming tool 100 shown in FIG. 10 is formed into the flat surface 110. However, the end face may have any other shape.

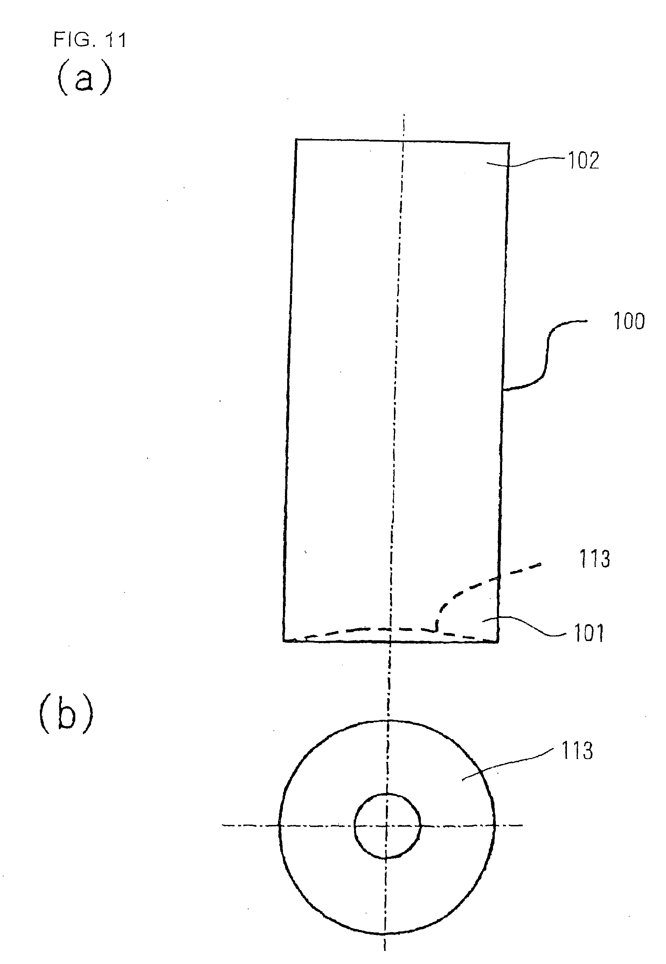

For the tool 100 shown in FIG. 11, the end face of the tip end portion 101 is formed into a concave surface 113 having a bottom on the axis side. The circle in the center of FIG. 11B shows that as shown by a hidden line in FIG. 11A, the curvature of arc, which is a generating line of the concave surface 113, is different between the central portion and the outer peripheral portion.

Since the end face of the tip end portion 101 of the convex forming tool 100 is formed into the concave surface 113, the amount of metal located under the end face is large as compared with the case where the end face of the tip end portion 101 is formed into the flat surface. Therefore, in the case where the second member 20 lies on the right-hand side of the first member 10, and the convex forming tool 100 is rotated clockwise, the transfer amount of metal can further be secured. This fact is thought as described below. When the tool 100 rotates from the end portion of the first member 10 to the right-hand side, the metal of the first member 10 entering into the concave surface 113 is not supported because the first member 10 is absent under the concave surface 113, and hence the metal drops downward. Since the amount of metal dropping downward is large, the metal is elongated long to the rear end portion 111 of the tip end portion 101 of the tool 100, and is pressed on the second member 20. Therefore, the metal of the first member 10 is transferred properly through a long transfer distance.

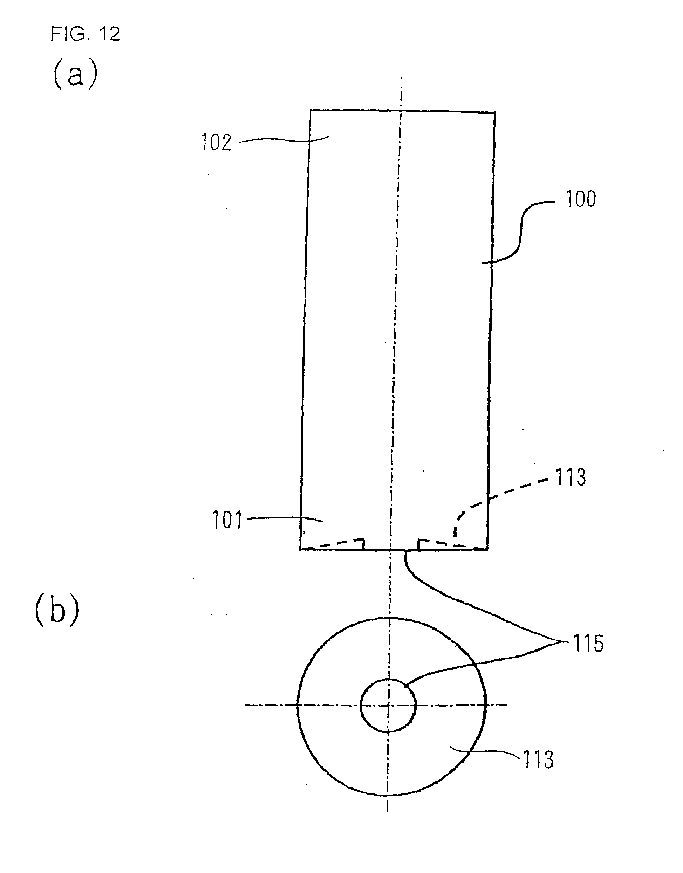

The tool 100 shown in FIG. 12 is formed with the concave surface 113 in the tip end portion 101, and is further provided with a small-diameter convex portion 115 in the central portion thereof.

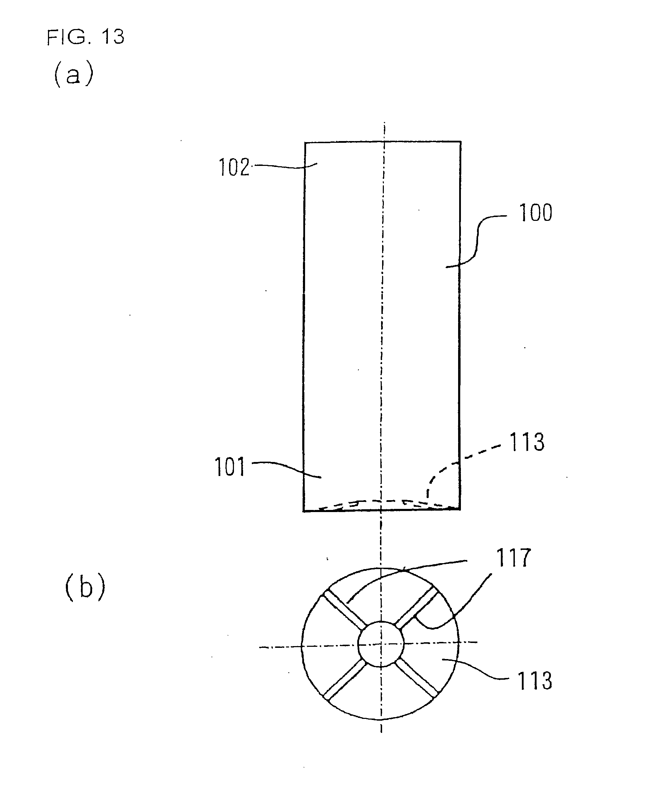

The tool 100 shown in FIG. 13 is provided with a cross-shaped convex portion 117 on the concave surface 113.

Also, the tool 100 can also be provided with four collars 117 projecting from the arcuate concave surface 113.

The end face of the tip end portion 101 of the tool 100 shown in FIGS. 11 to 13 is not formed into the flat surface; however, it can be said that the end face thereof is substantially flat. FIGS. 11B to 13B are plan views in which the lower end of the tool 100 shown in FIGS. 11A to 13A is viewed from the downside.

In the above-described example, the convex forming tool 100 and the friction stir welding tool 200 are moved based on the two-dimensional data of the butt portion (U shape). Conventionally, an optical sensor is generally provided to measure the butt portion and thereby to guide the tool 200. In this example, however, this optical sensor is not provided. Instead, the tools 100 and 200 each are provided with a sensor for checking and storing a travel distance in the lengthwise direction from an origin S and a travel distance in the width direction. First, the rotation center of the convex forming tool 100 or the friction stir welding tool 200 is made to coincide with the start point (origin) S, and the tool 100 or 200 is moved based on the two-dimensional data. According to this method, the tools 100 and 200 can be moved without the measurement of the position of the butt portion, so that the tools 100 and 200 can be moved easily at a low cost. When the convex forming tool 100 is moved, the position of the butt portion can be measured because the height difference is present. When the friction stir welding tool 200 is moved, however, the center position of tool cannot be measured easily because the butt portion has no height difference. Also, the right end portion of the convex substitute portion 150 zigzags along the lengthwise direction, and the right end side (convex portion 93 side) projects upward, so that it is difficult to measure the position of the center of the convex substitute portion 150.

## Claims

1. A friction stir welding method in which a first member and a second member are butted together with the top surface of the first member at a higher position than the top surface of the second member, and the butt position having a height difference of the top surface is friction stir welded, comprising the steps of:
transferring a metal on the first member side to a top surface on the second member side to form a convex on the top surface of the second member by moving a round-bar shaped rotating convex forming tool having a tip end portion whose end face is substantially flat relatively with respect to the first and second members while the convex forming tool is rotated; and
performing friction stir welding by inserting a rotating friction stir welding tool from above the convex on the second member and the first member and by moving the friction stir welding tool relatively with respect to the first and second members in a state in which a boundary between a large-diameter portion of the friction stir welding tool and a small-diameter portion at the tip end of the tool is positioned within a height range of the convex.

2. The friction stir welding method according to claim 1, wherein
when viewing from the direction in which the convex forming tool moves relative to the two members, the second member lies on a right-hand side;
the end face of the tip end portion of the convex forming tool is formed into a flat surface, and an upper end side of the convex forming tool is inclined to a rear in a direction in which the tool moves relative to the two members; and
further, the convex forming tool is rotated clockwise.

3. The friction stir welding method according to claim 1, wherein
when viewing from the direction in which the convex forming tool moves relative to the two members, the second member lies on a left-hand side;
the end face of the tip end portion of the convex forming tool is formed into a flat surface, and an upper end side of the convex forming tool is inclined to a rear in a direction in which the tool moves relative to the two members; and
further, the convex forming tool is rotated counterclockwise.

4. The friction stir welding method according to claim 1, wherein
when viewing from the direction in which the convex forming tool moves relative to the two members, the second member lies on a right-hand side;
the end face of the tip end portion of the convex forming tool is formed into a concave surface concaved on an axis side, and an upper end side of the convex forming tool is inclined to a rear in a direction in which the tool moves relative to the two members; and
further, the convex forming tool is rotated clockwise.

5. The friction stir welding method according to claim 1, wherein
when viewing from the direction in which the convex forming tool moves relative to the two members, the second member lies on a left-hand side;
the end face of the tip end portion of the convex forming tool is formed into a concave surface concaved on an axis side, and an upper end side of the convex forming tool is inclined to a rear in a direction in which the tool moves relative to the two members; and
further, the convex forming tool is rotated counterclockwise.

6. The friction stir welding method according to claim 1, wherein
the convex forming tool and the friction stir welding tool are moved relatively with respect to the first and second members based on continuous two-dimensional data of the butt portion between the first member and the second member.
